# EUROPÄISCHE PATENTSCHRIFT

(11) **EP 4 438 839 B1**
(45) Veröffentlichungstag und Bekanntmachung des Hinweises auf die Patenterteilung: **19.03.2025**
(21) Anmeldenummer: 23218439.0
(22) Anmeldetag: 20.12.2023
(51) Int. Cl.: E05C 9/22, E05C 9/00, E05D 5/02, F16B 2/04

(54) **KLEMMEINHEIT ZUR BEFESTIGUNG EINES BESCHLAGTEILS IN EINER BESCHLAGNUT EINES FENSTERS ODER EINER TÜR**
CLAMPING UNIT FOR FIXING A FITTING PART IN A FITTING GROOVE OF A WINDOW OR A DOOR
UNITÉ DE SERRAGE POUR LA FIXATION D'UNE FERRURE DANS UNE RAINURE DE FERRURE D'UNE FENÊTRE OU D'UNE PORTE

(30) Priorität: 29.03.2023 DE 102023108007
(43) Veröffentlichungstag der Anmeldung: 02.10.2024
(73) Patentinhaber: MACO Technologie GmbH, 5020 Salzburg (AT)
(72) Erfinder: SCHÄFER, Felix, 83457 Bayrisch Gmain (DE)
(74) Vertreter: Manitz Finsterwald Patent- und Rechtsanwaltspartnerschaft mbB

(56) Entgegenhaltungen:
- WO-A1-00/49299
- DE-A1- 102007 013 438
- FR-A1- 3 013 375

## Beschreibung

Die vorliegende Erfindung betrifft eine Klemmeinheit, mittels derer sich ein Beschlagteil wie beispielsweise eine Treibstangenanordnung in der Beschlagnut eines Fensters oder einer Tür befestigen lässt, ohne dass hierzu zwingend selbstschneidende Schrauben zum Einsatz kommen müssen, mittels derer üblicherweise solche Beschlagteile in einer Beschlagnut am Fenster bzw. der Tür verschraubt werden.

Die DE 10 2007 013 438 A1 beschreibt eine Dübel-artige Befestigungsvorrichtung in Form eines Klemmelements mit mehreren Halteschenkeln, welche mittels eines keilförmigen Spreizelements durch Drehung einer Schraube auseinander gespreizt werden können, sodass die freien Enden der Halteschenkel gegen die Innenwand eines Rohrs gespreizt werden können, in dem sich das Klemmelement befindet.

Weitergehender Stand der Technik ergibt sich ferner aus der WO 00/49299 A1, welche ebenfalls eine Klemmeinheit mit auseinander spreizbaren Armen beschreibt.

Bei Fenstern oder Türen ist es allgemein üblich, dass Beschlagteile in einer Beschlagnut des Fensters bzw. der Tür befestigt werden. Bei einem Beschlagteil kann es sich beispielsweise um eine Treibstangenanordnung mit einer Stulpschiene und einer längs der Stulpschiene geführten Treibstange handeln. Um solch eine Treibstangenanordnung in der Beschlagnut eines Fensters oder einer Tür befestigen zu können, kommen üblicherweise Schrauben mit einem selbstschneidenden Spitzgewinde zum Einsatz, wobei diese Schrauben durch in der jeweiligen Treibstangenanordnung ausgebildete Löcher hindurchgeführt und anschließend im Nutgrund der Beschlagnut verschraubt werden. Reißen die in Rede stehenden Schrauben beispielsweise aufgrund unsachgemäßer Betätigung des Beschlagteils aus, kann das Fenster bzw. die Tür nicht mehr zuverlässig geschlossen werden. Reißen hingegen die in Rede stehenden Befestigungsschrauben bei einem Einbruchsversuch aus, lässt sich die Tür bzw. das Fenster bei dem Einbruchsversuch in unerwünschter Weise öffnen.

Der Erfindung liegt daher die Aufgabe zugrunde, ein Befestigungsmittel anzugeben, mittels dessen sich ein Beschlagteil wie beispielsweise eine Treibstangenanordnung in einer Beschlagnut eines Fensters oder einer Tür befestigen lässt, ohne dass hierbei zwingend Schraubbefestigungsmittel der voran beschriebenen Art zum Einsatz kommen müssen.

Diese Aufgabe wird mit einer Klemmeinheit mit den Merkmalen des Anspruchs 1 und insbesondere dadurch gelöst, dass die Klemmeinheit einen Grundkörper aufweist, welcher gewissermaßen als Gehäuse zur Aufnahme der weiteren Komponenten der Klemmeinheit dient, wobei dieser Grundkörper zumindest eine Befestigungseinrichtung aufweist, über die sich das Beschlagteil zu Montagezwecken lösbar an dem Grundkörper anbringen lässt. Die Klemmeinheit lässt sich also über den Grundkörper mittels dessen Befestigungseinrichtung an dem Beschlagteil anbringen, so dass dieses zusammen mit der Klemmeinheit bzw. deren Grundkörper in die Beschlagnut eingesetzt werden kann.

Des Weiteren verfügt die Klemmeinheit über zwei Klemmbacken, welche verliersicher in einer ersten Bewegungsrichtung translatorisch beweglich in dem Grundkörper zwischen einer Freigabestellung und einer Klemmstellung gelagert sind. Die Klemmstellung unterscheidet sich dabei von der Freigabestellung der Klemmbacken dadurch, dass diese in der Klemmstellung weiter voneinander beabstandet sind als in der Freigabestellung. Befinden sich die Klemmbacken in der Freigabestellung, kann somit die Klemmeinheit in die Beschlagnut eingesetzt werden, ohne dass dabei die Klemmbacken mit den Wänden der Beschlagnut in Anlage gelangen. Werden anschließend die Klemmbacken in die Klemmstellung überführt, so befinden sich die Klemmbacken mit den Wänden der Beschlagnut in Eingriff, wodurch die Klemmeinheit in der Beschlagnut verspannt und in derselben durch Klemmung bzw. Reibschluss gehalten wird.

Um die beiden Klemmbacken in ihre Klemmstellung überführen zu können, verfügt die Klemmeinheit des Weiteren über einen Keil, welcher verliersicher zwischen den beiden Klemmbacken in dem Grundkörper gelagert ist. Wird der Keil in den Abstand zwischen den beiden Klemmbacken eingetrieben, so bewirkt dies, dass die beiden Klemmbacken in der gewünschten Weise auseinandergespreizt und in ihre Klemmstellung gedrängt werden, in der die Klemmeinheit mittels der beiden Klemmbacken in der Beschlagnut verspannt wird.

Da sowohl die beiden Klemmbacken als auch der Keil verliersicher in dem Grundkörper gelagert sind, ist die Klemmeinheit als Einheit handhabbar, ohne dass dabei die Gefahr besteht, dass sich während der Montage einzelne Komponenten von der Klemmeinheit lösen können.

Anstelle ein Beschlagteil in herkömmlicher Art und Weise mittels selbstschneidender Schrauben im Nutgrund einer Beschlagnut zu verschrauben, ermöglicht es die erfindungsgemäße Klemmeinheit somit, ein Beschlagteil kraftschlüssig in einer Beschlagnut zu verspannen, wobei es selbstverständlich möglich ist, das Beschlagteil unterstützend mittels selbstschneidender Schrauben im Nutgrund der Beschlagnut zu verschrauben.

Im Folgenden wird nun auf bevorzugte Ausführungsformen der erfindungsgemäßen Klemmeinheit eingegangen, wobei sich weitere Ausführungsformen auch aus den abhängigen Ansprüchen, der Figurenbeschreibung sowie den Figuren selbst ergeben können.

So kann es gemäß einer ersten Ausführungsform vorgesehen sein, dass der Keil eine Gewindebohrung mit einem Innengewinde zur Aufnahme einer Gewindespindel aufweist, mittels derer sich der Keil translatorisch in einer zu der ersten Bewegungsrichtung senkrechten zweiten Bewegungsrichtung bewegen lässt. Die Gewindespindel weist hierbei ein zu dem Innengewinde der Gewindebohrung passendes Außengewinde auf, so dass durch die Gewindespindel und den Keil gewissermaßen ein Spindeltrieb gebildet wird, mittels dessen der Keil kontrolliert in den Abstand zwischen den beiden Klemmbacken gedrängt, insbesondere gezogen werden kann, um diese auseinanderzuspreizen.

Anstelle mittels des beschriebenen Spindeltriebs wäre es jedoch ebenfalls möglich, den Keil in den Abstand zwischen den beiden Klemmbacken zu pressen, indem beim Einsetzen der Klemmeinheit in die Beschlagnut der Keil mit dem Nutgrund in Anlage gelangt. Wird dabei der Grundkörper mitsamt den Klemmbacken tiefer in die Beschlagnut gepresst, so bewirkt dies aufgrund der Tatsache, dass der Keil bereits mit dem Nutgrund in Anlage steht, dass der Keil zunehmend in den Abstand zwischen den beiden Klemmbacken gepresst wird, wodurch in der gewünschten Weise die beiden Klemmbacken auseinandergespreizt werden.

Damit die Klemmbacken, nachdem sie mittels des Keils in ihre Klemmstellung gedrängt wurden, nicht wieder zurück in ihre Freigabestellung gelangen können, kann es gemäß einer weiteren Ausführungsform vorgesehen sein, dass zwischen dem Keil und den Klemmbacken und/oder zwischen den Klemmbacken und dem Grundkörper Rastmittel wie beispielsweise Widerhaken oder dergleichen wirksam sind, die verhindern, dass die Klemmbacken zurück in ihre Freigabestellung gelangen können. Derartige Rastmittel können sowohl bei der Ausführungsform mit Spindeltrieb als auch bei der Ausführungsform ohne Spindeltrieb vorgesehen werden, bei der der Keil mit dem Nutgrund in Anlage gelangt, um die Klemmbacken bei fortschreitendem Einsetzen der Klemmeinheit in die Beschlagnut auseinanderspreizen zu können.

Gemäß einer weiteren Ausführungsform kann es vorgesehen sein, dass das Außengewinde der Gewindespindel an einer Schraube mit einem selbstschneidenden Spitzgewinde vorgesehen ist, das sich zum freien Ende der Schraube hin verjüngt, wobei es insbesondere vorgesehen sein kann, dass sich das Außengewinde am Schaft der Schraube näher bei dem Spitzgewinde als beim Schraubenkopf an einem dem freien Ende der Schraube gegenüberliegenden Ende der Schraube befindet. Dadurch, dass die Gewindespindel gewissermaßen Bestandteil einer selbstschneidenden Schraube ist, ist es somit möglich, mit ein und demselben Befestigungsmittel, nämlich mit der Schraube mit dem daran ausgebildeten Außengewinde der Gewindespindel, die Klemmeinheit im Nutgrund der Beschlagnut zu verschrauben und gleichzeitig mit demselben Befestigungsmittel die Klemmbacken zu betätigen, um so die Klemmeinheit zusätzlich kraftschlüssig in der Beschlagnut verspannen zu können.

Gemäß einer weiteren Ausführungsform kann es vorgesehen sein, dass der Keil erste und zweite schräg aufeinander zulaufende Keilflächen aufweist, wobei die Gewindebohrung in dem Keil zwischen den beiden Keilflächen ausgebildet ist. Der Keil muss jedoch nicht zwingend zwei schräg aufeinander zulaufende Keilflächen aufweisen, wie dies beispielsweise dann der Fall sein kann, wenn die Klemmbacken ihrerseits entsprechende Schrägflächen aufweisen, welche bewirken, dass die Klemmbacken auseinandergespreizt werden, wenn der Keil in den Abstand zwischen den beiden Klemmbacken gepresst wird. Als Keil kann somit im Grunde genommen auch ein beliebig geformter Körper verwendet werden, sofern die Klemmbacken ihrerseits mit entsprechenden Schrägflächen ausgebildet sind.

Gemäß einer bevorzugten Ausführungsform kann es jedoch vorgesehen sein, dass eine erste Klemmbacke der beiden Klemmbacken eine erste Schrägfläche aufweist, die mit einer ersten Keilfläche des Keils flächig in Anlage steht bzw. diese flächig berührt, und dass eine zweite Klemmbacke der beiden Klemmbacken eine zweite Schrägfläche aufweist, die mit einer zweiten Keilfläche des Keils flächig in Anlage steht bzw. diese flächig berührt. Dadurch, dass der Keil somit flächig mit den Klemmbacken in Anlage gelangt, werden die Normalspannungen und dadurch die Reibung zwischen dem Keil und den beiden Klemmbacken klein gehalten, so dass der Keil mit geringem Kraftaufwand in den Abstand zwischen den beiden Klemmbacken eingepresst werden kann.

Wie bereits erwähnt, handelt es sich bei dem Grundkörper der Klemmeinheit gewissermaßen um ein die weiteren Komponenten der Klemmeinheit aufnehmendes Gehäuse. Dementsprechend kann es sich gemäß einer weiteren Ausführungsform bei dem Grundkörper um ein in eine dreidimensionale Form gebogenes Blechteil handeln, das zuvor aus einem Metallblech gestanzt und anschließend in Form gebogen wurde, um als Gehäuse für die weiteren Komponenten der Klemmeinheit dienen zu können.

Insbesondere kann das gebogene Blechteil gemäß einer weiteren Ausführungsform eine rechteckige Basisplatte mit zwei einander gegenüberliegenden ersten Seiten und zwei einander gegenüberliegenden zweiten Seiten umfassen, wobei von jeder der ersten Seiten jeweils eine um +90° aus der Ebene der Basisplatte herausgebogene Führungsplatte absteht, wobei die beiden Klemmbacken zwischen den beiden Führungsplatten gelegen und durch diese in der ersten Bewegungsrichtung geführt sind. Sofern hier davon die Rede ist, dass die beiden Führungsplatten um einen positiven Winkelbetrag, nämlich um +90° aus der Ebene der Basisplatte herausgebogen sind, so bedeutet dies hier im Kontext, dass beide Führungsplatten so aus der Ebene der Basisplatte herausgebogen sind, dass sich beide Führungsplatten auf derselben Seite der Basisplatte befinden. Im Querschnitt betrachtet bildet somit die Basisplatte zusammen mit den beiden Führungsplatten im Wesentlichen einen U-förmigen Querschnitt, wobei die Führungsplatten die Schenkel des "U" und die Basisplatte den Steg des "U" bilden/bildet.

Damit die beiden Klemmbacken und der Keil verliersicher in dem Grundkörper gehalten werden können, können die beiden Führungsplatten an ihrem freien Ende jeweils eine Umkantung ausbilden, von denen eine jede die beiden Klemmbacken bzw. den Keil hintergreift. Insbesondere kann es hierbei vorgesehen sein, dass jede Führungsplatte eine rechteckige Gestalt mit zwei einander gegenüberliegenden ersten Seiten und zwei einander gegenüberliegenden zweiten Seiten umfasst, wobei an der der ersten Seite der Basisplatte gegenüberliegenden ersten Seite der jeweiligen Führungsplatte jeweils eine Umkantung ausgebildet ist, von denen eine jede die beiden Klemmbacken hintergreift.

Zusätzlich kann an den zweiten Seiten der Führungsplatten jeweils ein umgebogener Führungszapfen ausgebildet sein, wobei diese Führungszapfen in entsprechende Führungsnuten eingreifen, die in der ersten Bewegungsrichtung beiderseits in den beiden ersten Klemmbacken ausgebildet sind. Sind die in Rede stehenden Führungsnuten nahe den Schrägflächen der Klemmbacken, welche mit den jeweiligen Keilflächen des Keils flächig in Anlage stehen, verschlossen, so kann hierdurch sichergestellt werden, dass die Klemmbacken nicht aus dem Grundkörper in der ersten Bewegungsrichtung herausfallen oder herausgezogen werden können.

Damit auch der Keil nicht aus dem Grundkörper herausfallen kann, kann es gemäß einer weiteren Ausführungsform vorgesehen sein, dass die Länge des Keils (gemessen zwischen den beiden Führungsplatten) größer ist als der lichte Abstand zwischen den beiden Umkantungen, um von diesen hintergriffen zu werden. Sowohl der Keil als auch die beiden Klemmbacken sind somit verliersicher in dem Grundkörper gehalten, so dass dieser zusammen mit dem Keil und den beiden Klemmbacken als Einheit handhabbar ist, ohne dass Gefahr besteht, dass sich einzelne Komponenten lösen können.

Gemäß noch einer weiteren Ausführungsform kann es vorgesehen sein, dass von jeder zweiten Seite der Basisplatte jeweils eine um einen negativen Winkelbetrag aus der Ebene der Basisplatte herausgebogene Halteplatte absteht, wobei es insbesondere vorgesehen sein kann, dass die voneinander abgewandten Oberflächen der Halteplatten eine Profilierung aufweisen. Beispielsweise kann der negative Winkelbetrag -87° betragen. Vorzugsweise liegt der negative Winkelbetrag zwischen -48° und -77°, insbesondere zwischen -60° und -70°.

Sofern hier davon die Rede ist, dass die beiden Halteplatten um einen negativen Winkelbetrag aus der Ebene der Basisplatte herausgebogen sind, so bedeutet dies, dass die Halteplatten von der anderen Seite als die beiden Führungsplatten abstehen. Ein mittels der Klemmeinheit in einer Beschlagnut zu befestigendes Beschlagteil kann somit zumindest zum Teil in dem Abstand zwischen den beiden Halteplatten aufgenommen und darin zu Montagezwecken lokalisiert werden. Darüber hinaus können die beiden Halteplatten aufgrund ihrer Profilierung zur Montagesicherung der Klemmeinheit in einer Beschlagnut genutzt werden, um so die Klemmeinheit in der Beschlagnut temporär zu sichern, bevor sie mittels der Klemmbacken in der Beschlagnut verspannt wird.

Gemäß einer weiteren Ausführungsform kann es vorgesehen sein, dass in der Basisplatte eine Öffnung ausgebildet ist, welche mit der Gewindebohrung des Keils zur Aufnahme einer Gewindespindel fluchtet. Die Gewindespindel kann somit durch das Beschlagteil sowie durch die in Rede stehende Öffnung in den Keil eingeführt werden, um diesen durch Betätigung der Gewindespindel in den Abstand zwischen den beiden Klemmbacken ziehen zu können.

Zwar lässt sich ein Beschlagteil in der bereits zuvor beschriebenen Art und Weise mittels der Halteplatten in dem Abstand zwischen denselben an dem Grundkörper lokalisieren; um das Beschlagteil jedoch besonders zuverlässig an dem Grundkörper sichern zu können, kann der Grundkörper zumindest einen aus der Basisplatte um einen negativen Winkelbetrag herausgebogenen Abschnitt umfassen. Beispielsweise können beiderseits der zuvor erwähnten Öffnung in der Basisplatte zwei frei auskragende Arme aus der Basisplatte um betragsmäßig etwas weniger als -90° herausgebogen sein, so dass diese durch eine entsprechende Öffnung in dem Beschlagteil hindurchgeführt werden können, um so das Beschlagteil an dem Grundkörper temporär sichern zu können.

Im Folgenden wird die Erfindung nun rein exemplarisch unter Bezugnahme auf die Figuren beschrieben, wobei:
- Fig. 1: eine perspektivische Darstellung einer Ausführungsform einer erfindungsgemäßen Klemmeinheit im unbetätigten Zustand zeigt;
- Fig. 2: eine Seitenansicht der Klemmeinheit der Fig. 1 zeigt;
- Fig. 3: eine Frontalansicht der Klemmeinheit der Fig. 1 zeigt;
- Fig. 4: eine Draufsicht auf die Klemmeinheit der Fig. 1 zeigt;
- Fig. 5: einen Vertikalschnitt durch die Klemmeinheit der Fig. 1 gemäß der Schnittführung A-A der Fig. 2 zeigt;
- Fig. 6: eine perspektivische Darstellung der Klemmeinheit der Fig. 1 einschließlich einer daran gesicherten Treibstangenanordnung zeigt;
- Fig. 7: einen Vertikalschnitt durch die Anordnung der Fig. 6 zeigt;
- Fig. 8: eine perspektivische Darstellung der Anordnung der Fig. 6 nach erfolgter Betätigung der Klemmeinheit zeigt; und
- Fig. 9: eine vertikale Schnittdarstellung durch die Anordnung der Fig. 8 zeigt.

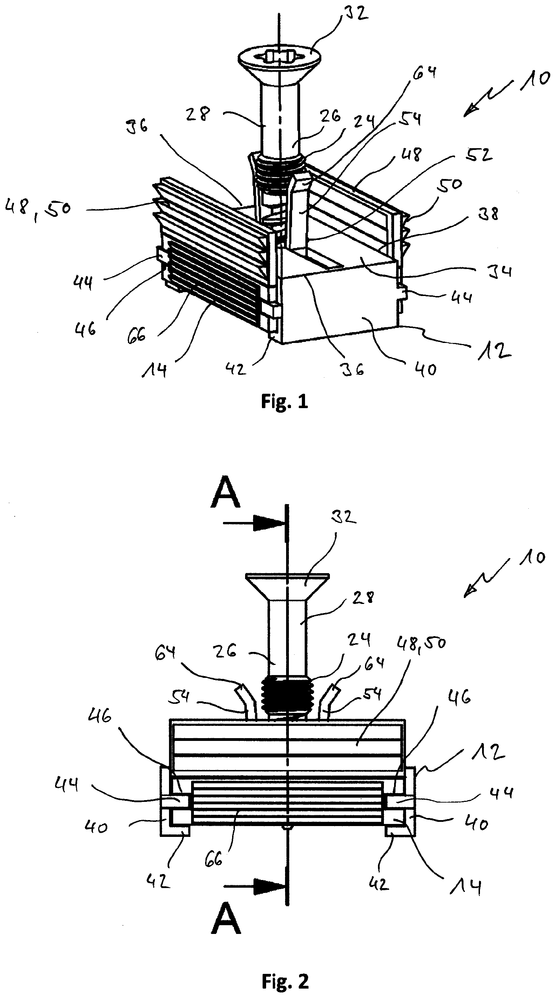

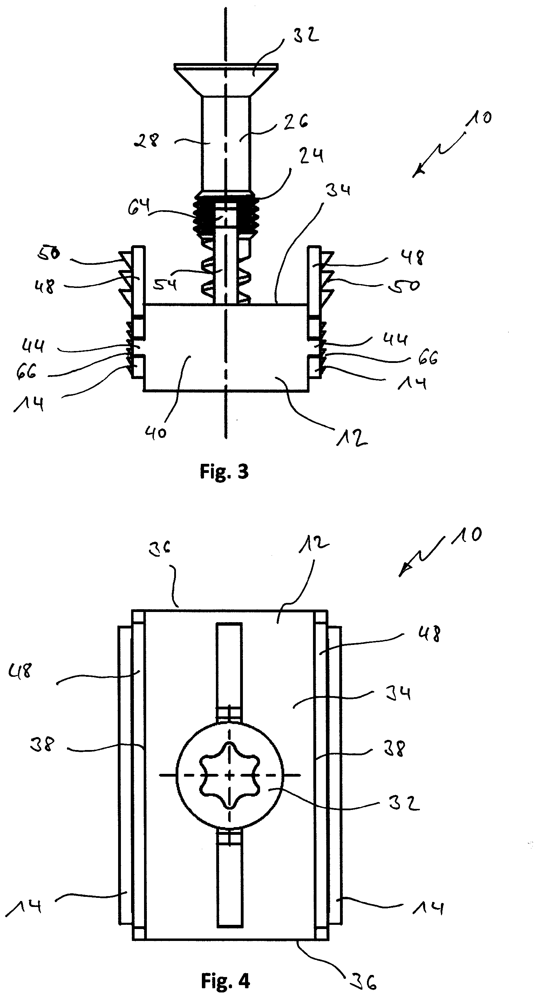

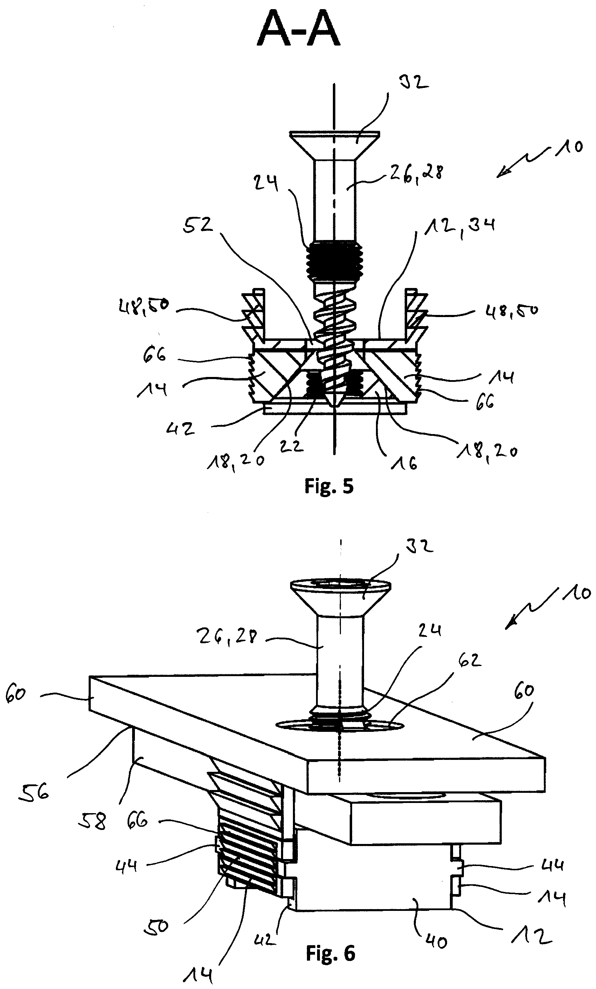

Im Folgenden wird zunächst unter Bezugnahme auf die Figs. 1 bis 5 eine Klemmeinheit 10 im unbetätigten Zustand beschrieben, bevor anschließend insbesondere unter Bezugnahme auf die Fig. 6 bis 9 die Funktionsweise der Klemmeinheit 10 erläutert wird.

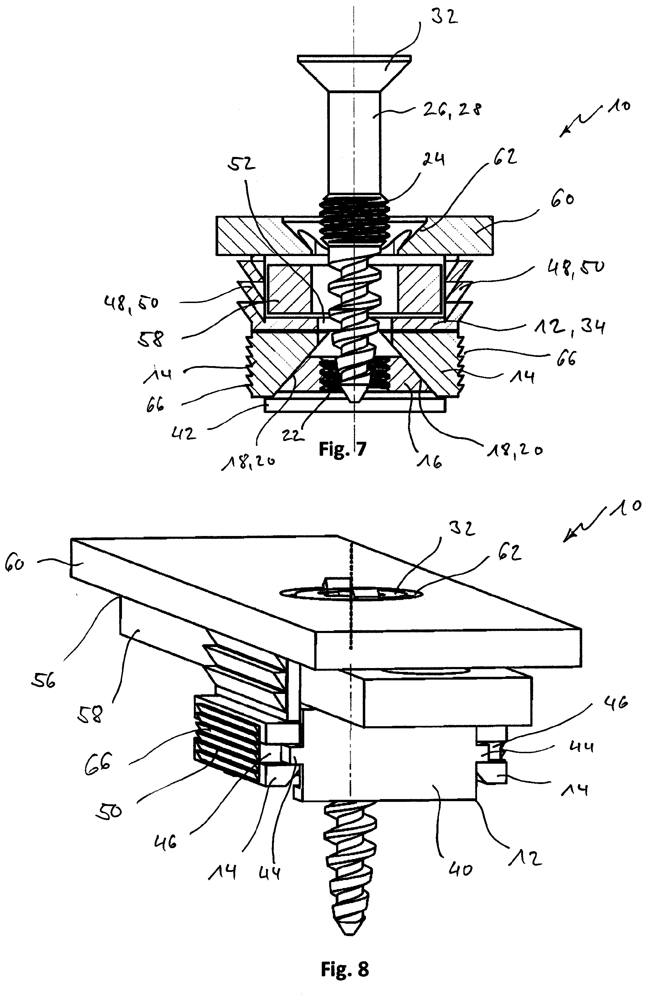

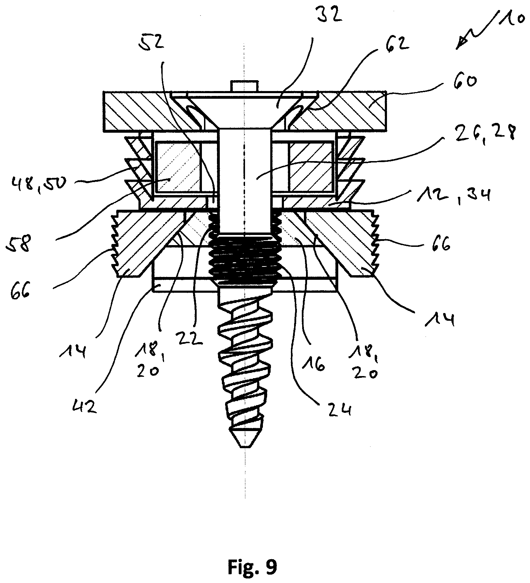

Wie insbesondere der Zusammenschau der Figs. 1, 2 und 3 entnommen werden kann, weist die Klemmeinheit 10 einen dreidimensionalen Grundkörper 12 auf. Dieser dient gewissermaßen als Gehäuse für die weiteren Komponenten der Klemmeinheit 10. Bei diesen weiteren Komponenten handelt es sich zum einen um zwei Klemmbacken 14 sowie zum anderen um einen Keil 16, welcher sich in dem Grundkörper 12 im Abstand zwischen den beiden Klemmbacken 14 befindet, durch den diese voneinander beabstandet sind. Sowohl der Keil 16 als auch die beiden Klemmbacken 14 sind dabei verliersicher in dem Grundkörper 12 gelagert, und zwar derart, dass sich die Klemmbacken 14 in einer ersten Bewegungsrichtung in dem Grundkörper 12 bewegen können, welche zu der Bewegungsrichtung des Keils 16 senkrecht orientiert ist, welche hier als zweite Bewegungsrichtung bezeichnet wird. Insbesondere können sich die beiden Klemmbacken 14 in dem Grundkörper 12 zwischen einer Freigabestellung gemäß Fig. 5 oder 7 und einer Klemmstellung gemäß Fig. 9 bewegen, wohingegen sich der Keil 16 in dem Grundkörper 12 senkrecht zur ersten Bewegungsrichtung der Klemmbacken 14 bewegen lässt, wie sich dies beispielsweise aus der Zusammenschau der Fig. 5 und 9 ergibt.

Wie der Fig. 5 entnommen werden kann, weist der Keil 16 erste und zweite schräg zueinander ausgerichtete Keilflächen 18 auf, welche mit den Klemmbacken 14 in Anlage stehen. Insbesondere weisen die Klemmbacken 14 zu den Keilflächen 18 korrespondierende erste und zweite Schrägflächen 20 auf, welche mit den Keilflächen 18 des Keils 16 flächig in Anlage stehen. Wird somit der Keil 16 weiter in den Abstand zwischen den beiden Klemmbacken 14 gedrängt bzw. gepresst, so führt dies dazu, dass die beiden Klemmbacken 14 auseinandergespreizt und ausgehend aus ihrer in der Fig. 5 dargestellten Freigabestellung in ihre Klemmstellung gemäß Fig. 9 gepresst werden.

Um den Keil 16 in der beschriebenen Art und Weise in den Abstand zwischen den beiden Klemmbacken 14 pressen zu können, verfügt die Klemmeinheit 10 über einen Spindeltrieb, dessen Spindelmutter durch den Keil 16 gebildet wird. Dieser weist zwischen seinen beiden Keilflächen 18 eine Gewindebohrung 22 mit einem Innengewinde auf, welches sich in Schraubeingriff mit dem Außengewinde 24 einer Gewindespindel 26 befindet.

Bei der konkret dargestellten Ausführungsform ist das Außengewinde 24 bzw. die Gewindespindel 26 Bestandteil einer Schraube 28 mit einem selbstschneidenden Spitzgewinde, das sich zum freien Ende der Schraube 28 hin verjüngt. Bei der dargestellten Ausführungsform befindet sich hierbei das Außengewinde 24 für den Gewindetrieb am Schaft der Schraube 28 näher bei dem Spitzgewinde als an dem Kopf 32 der Schraube 28. Insbesondere grenzt hierbei das Außengewinde 24 für den Spindeltrieb direkt an das Spitzgewinde der Schraube 28 an. Befindet sich somit das Außengewinde 24 für den Spindeltrieb in Schraubeingriff mit dem Innengewinde der Gewindebohrung 22 des Keils 16, so kann durch Drehung der Schraube 28 der Keil 16 tiefer in den Abstand zwischen den beiden Klemmbacken 14 gezogen werden, wie dies nachfolgend noch genauer erläutert wird.

Im Folgenden wird nun genauer auf die Ausbildung des gehäuseartigen Grundkörpers 12 eingegangen. Dieser ist aus einem aus einem Metallblech gestanzten Blechteil gefertigt, welches in Form gebogen wurde, um dem Grundkörper 12 eine dreidimensionale Form zu verleihen. Bei der hier dargestellten Ausführungsform umfasst das Blechteil eine rechteckige Basisplatte 34 mit zwei einander gegenüberliegenden ersten Seiten 36 und zwei einander gegenüberliegenden zweiten Seiten 38. Von jeder der ersten Seiten 36 steht dabei nach unten eine Führungsplatte 40 ab, welche aus der Ebene der Basisplatte 34 um +90° nach unten gebogen ist. Durch die Basisplatte 34 und die beiden Führungsplatten 40 wird somit ein U-förmiger Querschnitt gebildet, wobei sich zwischen den beiden Führungsplatten 40 die beiden Klemmbacken 14 sowie der Keil 16 befinden, siehe hierzu die Fig. 1 und 2.

Die beiden Klemmbacken 14 sind somit zwischen den beiden Führungsplatten 40 durch dieselben in der ersten Bewegungsrichtung geführt, welche senkrecht zur Achse der Schraube 28 bzw. der Achse der Gewindebohrung 22 des Keils 16 ausgerichtet ist.

Damit der Keil 16 und die beiden Klemmbacken 14 nicht aus dem gehäuseartigen Grundkörper 12 herausfallen können, weisen die beiden Führungsplatten 40 an ihrer der ersten Seite der Basisplatte 34 gegenüberliegenden Seite jeweils eine Umkantung 42 auf, von denen eine jede die beiden Klemmbacken 14 sowie den Keil 16 um- bzw. hintergreift, siehe hierzu die Fig. 2. Die Länge des Keils 16 sowie die Länge der beiden Klemmbacken 14 zwischen den beiden Führungsplatten 40 ist somit größer als der lichte Abstand zwischen den beiden Umkantungen 42, so dass die Klemmbacken 14 sowie der Keil 16 im unbetätigten Zustand der Klemmeinheit 10 auf den Umkantungen 42 ruhen können.

Darüber hinaus sind an den gegenüberliegenden Seiten der beiden Führungsplatten 40 jeweils zwei Führungszapfen 44 ausgebildet, welche in an den beiden Seitenflächen der beiden Klemmbacken 14 ausgebildete Führungsnuten 46 eingreifen, so dass die beiden Klemmbacken 14 zusätzlich in ihrer ersten Bewegungsrichtung durch die Führungszapfen 44 geführt sind.

Wie den Figs. 1, 3 und 5 des Weiteren entnommen werden kann, sind an den zweiten Seiten der Basisplatte 34 jeweils um einen negativen Winkelbetrag aus der Ebene der Basisplatte 34 herausgebogene Halteplatten 48 ausgebildet, welche an ihren voneinander abgewandten Oberflächen jeweils eine Profilierung 50 in Form mehrerer parallel zur Ebene der Basisplatte 34 ausgebildeter Zahnrippen aufweisen. Die Halteplatten 48 stehen somit von einer anderen Seite der Basisplatte 34 ab als die Führungsplatten 40. Entgegen den Figs. 1, 3 und 5 beträgt der negative Winkelbetrag, um den die Halteplatten 48 aus der Ebene der Basisplatte 34 herausgebogen sind, betragsmäßig mehr als 90°. Beispielsweise kann der negative Winkelbetrag -87° betragen. Vorzugsweise liegt der negative Winkelbetrag zwischen -48° und -77°, insbesondere zwischen -60° und -70°.

Des Weiteren ist in der Basisplatte 34 eine Öffnung 52 ausgebildet, welche mit der Gewindebohrung 22 des Keils 16 fluchtet, so dass durch die in Rede stehende Öffnung 52 die Schraube 28 bzw. die Gewindespindel 26 in den Keil 16 eingeführt werden kann.

Darüber hinaus stehen von gegenüberliegenden Seiten der in Rede stehenden Öffnung 52 zwei Haltearme 54 von der Basisplatte 34 nach oben ab, wobei es sich bei diesen Haltearmen 54 um aus der Basisplatte 34 um einen negativen Winkelbetrag herausgebogene Abschnitte der Basisplatte 34 handelt.

Im Folgenden wird nun die Funktionsweise der erfindungsgemäßen Klemmeinheit 10 erläutert. Um mittels der Klemmeinheit 10 beispielsweise eine Treibstangenanordnung 56 in der Beschlagnut eines Fensters oder einer Tür sichern zu können, wird zunächst die Treibstangenanordnung 56 mittels der Haltearme 54 an der Klemmeinheit 10 temporär lösbar befestigt. Hierzu weist die Treibstangenanordnung 56 miteinander fluchtende Bohrungen 62 in sowohl der Treibstange 58 als auch der Stulpschiene 60 auf, wobei die Bohrung 62 der Stulpschiene 60 als Sternloch ausgebildet sein kann, deren Kontur komplementär zu dem Senkkopf 32 der Schraube 28 ausgebildet ist. Zur Befestigung der Treibstangenanordnung 56 an der Klemmeinheit 10 werden die beiden Haltearme 54 durch die Bohrungen 62 der Treibstangenanordnung 56 hindurchgesteckt, so dass die Treibstange 58 gemäß Fig. 7 zwischen den beiden Halteplatten 48 zu liegen kommt, wohingegen die Stulpschiene 60 auf dem freien Rand der beiden Halteplatten 48 aufliegt. Da die beiden Haltearme 54 an ihrem freien Ende jeweils radial nach außen gebogene Rückhalteabschnitte 64 aufweisen, ist somit die Treibstangenanordnung 56 zu Montagezwecken durch die Rückhalteabschnitte 64 temporär an der Klemmeinheit 10 gesichert.

Die so vorbereitete Treibstangenanordnung 56 kann nun mit der Klemmeinheit 10 voraus in die Beschlagnut (nicht dargestellt) eines Fensters oder einer Tür eingesetzt werden. Hierbei wird die Klemmeinheit 10 durch die an den Halteplatten 48 ausgebildete Profilierung 50 während der Montage an den Seitenwänden der Beschlagnut gehalten. Aufgrund der Tatsache, dass die Halteplatten 48 aus der Ebene der Basisplatte 34 um einen negativen Winkelbetrag herausgebogen sind, der betragsmäßig größer als 90° ist, werden die Halteplatten 48 beim Einsetzen der Klemmeinheit 10 in die Beschlagnut ausgelenkt und somit vorgespannt, wodurch die Klemmeinheit 10 besonders zuverlässig in der Beschlagnut während der Montage gehalten wird.

Um die Klemmeinheit 10 dauerhaft in der Beschlagnut sichern zu können, wird anschließend die Schraube 28 gemäß den Fig. 6 und 7 durch die Öffnung 52 in der Basisplatte 34 eingeführt, so dass sich das Spitzgewinde durch die Gewindebohrung 22 des Keils 16 hindurcherstreckt. Das Spitzgewinde der Schraube 28 trifft somit auf den Nutgrund der Beschlagnut, wobei sich jedoch zu diesem Zeitpunkt das Außengewinde 24 für den Spindeltrieb noch nicht in Schraubeingriff mit dem Innengewinde der Gewindebohrung 22 des Keils 16 befindet.

Wird nun die Schraube 28 gedreht, so wird sie in den Nutgrund der Beschlagnut eingeschraubt, was zur Folge hat, dass das Außengewinde 24 für den Spindeltrieb mit dem Innengewinde der Gewindebohrung 22 des Keils 16 in Schraubeingriff gelangt. Sobald der Schraubenkopf 32 in der Senklochbohrung 62 der Stulpschiene 60 zu liegen kommt und somit die Schraube 28 nicht weiter in den Nutgrund der Beschlagnut eingeschraubt werden kann, führt eine fortgesetzte Drehbewegung der Schraube 28 dazu, dass der Keil 16 aufgrund des Schraubeingriffs zwischen dem Außengewinde 24 und dem Innengewinde der Gewindebohrung 22 in Richtung des Schraubenkopfs 32 und somit weiter in den Abstand zwischen den beiden Klemmbacken 14 gezogen wird. Zwar reißt hierbei möglicherweise die in den Nutgrund der Beschlagnut eingedrehte Schraube 28 aus; dies ist jedoch unschädlich, da die beiden Klemmbacken 14 durch den Keil 16 auseinandergespreizt werden, um sich mit ihrer Profilierung 66 in Form mehrerer parallel zur Ebene der Basisplatte 34 ausgebildeter Zahnrippen in den Seitenwänden der Beschlagnut (nicht dargestellt) zu verkeilen.

Zwar reißt die Schraube 28 in der zuvor beschriebenen Art und Weise während der Montage möglicherweise aus; nichtsdestotrotz kommt der Schraube 28 dennoch eine gewisse Haltefunktion zu, da durch diese die Treibstangenanordnung 56 zumindest in Längsrichtung formschlüssig in der Beschlagnut gehalten wird. In Längsrichtung der Schraube 28 wird die Treibstangenanordnung 56 hingegen durch die Klemmeinheit 10 in der Beschlagnut gesichert, da die Klemmbacken 14 in der zuvor beschriebenen Art und Weise durch den Keil 16 gegen die Wände der Beschlagnut gespannt sind, so dass die Treibstangenanordnung 56 zuverlässig in der Beschlagnut gehalten wird.

### Bezugszeichenliste

- 10: Klemmeinheit
- 12: Grundkörper
- 14: Klemmbacken
- 16: Keil
- 18: Keilfläche
- 20: Schrägfläche
- 22: Gewindebohrung
- 24: Außengewinde
- 26: Gewindespindel
- 28: Schraube
- 32: Schraubenkopf
- 34: Basisplatte
- 36: erste Seite
- 38: zweite Seite
- 40: Führungsplatte
- 42: Umkantung
- 44: Führungszapfen
- 46: Führungsnut
- 48: Halteplatte
- 50: Profilierung
- 52: Öffnung
- 54: Haltearme
- 56: Treibstangenanordnung
- 58: Treibstange
- 60: Stulpschiene
- 62: Bohrung
- 64: Rückhalteabschnitte
- 66: Profilierung

## Patentansprüche

1. Klemmeinheit (10) zur Befestigung eines Beschlagteils (56) in einer Beschlagnut eines Fensters oder einer Tür, wobei die Klemmeinheit (10) umfasst:
- einen Grundkörper (12) mit einer Befestigungseinrichtung (54) zur lösbaren Anbringung des Beschlagteils (56) an dem Grundkörper (12);
- zwei Klemmbacken (14), welche verliersicher und in einer ersten Bewegungsrichtung translatorisch beweglich in dem Grundkörper (12) zwischen einer Freigabestellung und einer Klemmstellung gelagert sind; und
- einen Keil (16) zum Auseinanderspreizen der beiden Klemmbacken (14) in ihre Klemmstellung, welcher zwischen den beiden Klemmbacken (14) verliersicher in dem Grundkörper (12) gelagert ist.

2. Klemmeinheit (10) nach Anspruch 1,
wobei der Keil (16) eine Gewindebohrung (22) mit einem Innengewinde zur Aufnahme einer Gewindespindel (26) zur translatorischen Bewegung des Keils (16) in einer zu der ersten Bewegungsrichtung senkrechten zweiten Bewegungsrichtung aufweist.

3. Klemmeinheit (10) nach Anspruch 2,
wobei die Klemmeinheit (10) ferner eine Gewindespindel (26) mit einem Außengewinde (24) umfasst, welches sich mit dem Innengwinde der Gewindebohrung (22) des Keils (16) in Schraubeingriff bringen lässt.

4. Klemmeinheit (10) nach Anspruch 3,
wobei das Außengewinde (24) an einer Schraube (28) mit selbstschneidendem Spitzgewinde ausgebildet ist, das sich zum freien Ende der Schraube (28) hin verjüngt, wobei es insbesondere vorgesehen ist, dass sich das Außengewinde (24) am Schaft der Schraube (28) näher bei dem Spitzgewinde als am Schraubenkopf (32) an einem dem freien Ende der Schraube (28) gegenüberliegenden Ende der Schraube (28) befindet.

5. Klemmeinheit (10) nach einem der Ansprüche 2 bis 4,
wobei der Keil (16) eine erste Keilfläche (18) und eine zweite Keilfläche (18) aufweist, wobei die Gewindebohrung (22) in dem Keil (16) zwischen den beiden Keilflächen (18) ausgebildet ist.

6. Klemmeinheit (10) nach Anspruch 5,
wobei eine erste Klemmbacke (14) eine erste Schrägfläche (20) aufweist, die mit einer ersten Keilfläche (18) des Keils (16) flächig in Anlage steht, und eine zweite Klemmbacke (14) eine zweite Schrägfläche (20) aufweist, die mit einer zweiten Keilfläche (18) des Keils (16) flächig in Anlage steht.

7. Klemmeinheit (10) nach einem der vorstehenden Ansprüche,
wobei der Grundkörper (12) ein in eine dreidimensionale Form gebogenes Blechteil ist, das aus einem Metallblech gestanzt ist.

8. Klemmeinheit (10) nach Anspruch 7,
wobei das gebogene Blechteil eine rechteckige Basisplatte (34) mit zwei einander gegenüberliegenden ersten Seiten (36) und zwei einander gegenüberliegenden zweiten Seiten (38) umfasst, wobei von jeder ersten Seite (36) jeweils eine um +90° aus der Ebene der Basisplatte (34) herausgebogene Führungsplatte (40) absteht, wobei die beiden Klemmbacken (14) zwischen den beiden Führungsplatten (40) gelegen und durch diese in der ersten Bewegungsrichtung geführt sind.

9. Klemmeinheit (10) nach Anspruch 8,
wobei jede Führungsplatte (40) eine rechteckige Gestalt mit zwei einander gegenüberliegenden ersten Seiten und zwei einander gegenüberliegenden zweiten Seiten umfasst,
wobei an der der ersten Seite (36) der Basisplatte (34) gegenüberliegenden ersten Seite der jeweiligen Führungsplatte (40) jeweils eine Umkantung (42) ausgebildet ist, von denen eine jede die beiden Klemmbacken (14) hintergreift, und/oder
wobei an den zweiten Seiten der Führungsplatten (40) umgebogene Führungszapfen (44) ausgebildet sind, die entsprechende Führungsnuten (46) eingreifen, die in der ersten Bewegungsrichtung beiderseits in den beiden Klemmbacken (14) ausgebildet sind.

10. Klemmeinheit (10) nach Anspruch 9,
wobei die Länge des Keils (16) zwischen den beiden Führungsplatten (40) größer ist als der lichte Abstand zwischen den beiden Umkantungen (42), um von diesen hintergriffen zu werden.

11. Klemmeinheit (10) nach zumindest einem der Ansprüche 8 bis 10,
wobei von jeder zweiten Seiten (38) der Basisplatte (34) jeweils eine um einen negativen Winkelbetrag aus der Ebene der Basisplatte (34) herausgebogene Halteplatte (48) absteht, wobei es insbesondere vorgesehen ist, dass die voneinander abgewandten Oberflächen der Halteplatten eine Profilierung (50) aufweisen.

12. Klemmeinheit (10) nach zumindest einem der Ansprüche 8 bis 11,
wobei in der Basisplatte (34) eine Öffnung (52) ausgebildet ist, welche mit der Gewindebohrung (22) des Keils (16) zur Aufnahme einer Gewindespindel (26) fluchtet.

13. Klemmeinheit (10) nach zumindest einem der Ansprüche 8 bis 12,
wobei die Befestigungseinrichtung zur lösbaren Anbringung des Beschlagteils (56) an dem Grundkörper (12) zumindest ein aus der Basisplatte (34) herausgebogener Abschnitt (54) derselben umfasst.

## Claims

1. A clamping unit (10) for fastening a fitting part (56) in a fitting groove of a window or a door, wherein the clamping unit (10) comprises:
- a base body (12) having a fastening device (54) for releasably attaching the fitting part (56) to the base body (12);
- two clamping jaws (14) which are captively supported and, in a first direction of movement, are translationally movably supported in the base body (12) between a release position and a clamping position; and
- a wedge (16) for spreading apart the two clamping jaws (14) into their clamping position, said wedge (16) being captively supported in the base body (12) between the two clamping jaws (14).

2. A clamping unit (10) according to claim 1,
wherein the wedge (16) has a threaded bore (22) having an internal thread for receiving a threaded spindle (26) for a translational movement of the wedge (16) in a second direction of movement perpendicular to the first direction of movement.

3. A clamping unit (10) according to claim 2,
wherein the clamping unit (10) further comprises a threaded spindle (26) having an external thread (24) which can be brought into screwing engagement with the internal thread of the threaded bore (22) of the wedge (16).

4. A clamping unit (10) according to claim 3,
wherein the external thread (24) is formed at a screw (28) having a self-tapping sharp thread which tapers towards the free end of the screw (28), wherein it is in particular provided that, at the shank of the screw (28), the external thread (24) is located closer to the sharp thread than at the screw head (32) at an end of the screw (28) that is disposed opposite the free end of the screw (28).

5. A clamping unit (10) according to any one of the claims 2 to 4,
wherein the wedge (16) has a first wedge surface (18) and a second wedge surface (18), wherein the threaded bore (22) is formed in the wedge (16) between the two wedge surfaces (18).

6. A clamping unit (10) according to claim 5,
wherein a first clamping jaw (14) has a first slanted surface (20), which is in areal contact with a first wedge surface (18) of the wedge (16), and a second clamping jaw (14) has a second slanted surface (20) which is in areal contact with a second wedge surface (18) of the wedge (16).

7. A clamping unit (10) according to any one of the preceding claims,
wherein the base body (12) is a sheet metal part which is bent into a three-dimensional shape and which is stamped from a metal sheet.

8. A clamping unit (10) according to claim 7,
wherein the bent sheet metal part comprises a rectangular base plate (34) having two mutually oppositely disposed first sides (36) and two mutually oppositely disposed second sides (38), wherein a respective guide plate (40) bent by +90° out of the plane of the base plate (34) projects from each first side (36), wherein the two clamping jaws (14) are disposed between the two guide plates (40) and are guided by them in the first direction of movement.

9. A clamping unit (10) according to claim 8,
wherein each guide plate (40) comprises a rectangular shape having two mutually oppositely disposed first sides and two mutually oppositely disposed second sides,
wherein a respective folded edge (42) is formed at the first side of the respective guide plate (40) disposed opposite the first side (36) of the base plate (34), with each of the folded edges (42) engaging behind the two clamping jaws (14), and/or
wherein bent-over guide pins (44) are formed at the second sides of the guide plates (40) and engage into corresponding guide grooves (46) which are formed at both sides in the two clamping jaws (14) in the first direction of movement.

10. A clamping unit (10) according to claim 9,
wherein the length of the wedge (16) between the two guide plates (40) is greater than the clearance between the two folded edges (42) in order to be engaged behind by them.

11. A clamping unit (10) according to at least one of the claims 8 to 10,
wherein a respective holding plate (48) which is bent out of the plane of the base plate (34) by a negative angular amount projects from each of the second sides (38) of the base plate (34), wherein it is in particular provided that the surfaces of the holding plates, said surfaces facing away from one another, have a profiling (50).

12. A clamping unit (10) according to at least one of the claims 8 to 11,
wherein an opening (52) is formed in the base plate (34) and is aligned with the threaded bore (22) of the wedge (16) for receiving a threaded spindle (26).

13. A clamping unit (10) according to at least one of the claims 8 to 12, wherein the fastening device for releasably attaching the fitting part (56) to the base body (12) comprises at least one section (54) of the base plate (34) that is bent out of the base plate (34).

## Revendications

1. Unité de serrage (10) destinée à fixer une partie de ferrure (56) dans une rainure à ferrure d'une fenêtre ou d'une porte, l'unité de serrage (10) comprenant :
- un corps de base (12) ayant un dispositif de fixation (54) destiné à monter de manière amovible la partie de ferrure (56) sur le corps de base (12) ;
- deux mâchoires de serrage (14) logées dans le corps de base (12) de manière à ne pas se perdre et à pouvoir se déplacer en translation dans une première direction de mouvement entre une position de libération et une position de serrage ; et
- une clavette (16) destinée à écarter les deux mâchoires de serrage (14) vers leur position de serrage, qui est logée entre les deux mâchoires de serrage (14) dans le corps de base (12) de manière à ne pas se perdre.

2. Unité de serrage (10) selon la revendication 1,
dans laquelle la clavette (16) présente un trou taraudé (22) avec un taraudage pour recevoir une broche filetée (26) destinée à déplacer en translation la clavette (16) dans une deuxième direction de mouvement perpendiculaire à la première direction de mouvement.

3. Unité de serrage (10) selon la revendication 2,
dans laquelle l'unité de serrage (10) comprend en outre une broche filetée (26) avec un filetage (24) apte à venir en prise par vissage avec le taraudage du trou taraudé (22) de la clavette (16).

4. Unité de serrage (10) selon la revendication 3,
dans laquelle le filetage (24) est réalisé sur une vis (28) à filetage triangulaire auto-taraudeur (30) qui se rétrécit vers l'extrémité libre de la vis (28), et il est en particulier prévu que le filetage (24) situé sur la tige de la vis (28) se trouve plus près du filetage triangulaire (30) que de la tête de vis (32) située à une extrémité de la vis (28) opposée à l'extrémité libre de la vis (28).

5. Unité de serrage (10) selon l'une des revendications 2 à 4,
dans laquelle la clavette (16) présente une première surface de clavette (18) et une deuxième surface de clavette (18), le trou taraudé (22) dans la clavette (16) étant ménagé entre les deux surfaces de clavette (18).

6. Unité de serrage (10) selon la revendication 5,
dans laquelle une première mâchoire de serrage (14) présente une première surface inclinée (20) qui est en appui à plat contre une première surface de clavette (18) de la clavette (16), et une deuxième mâchoire de serrage (14) présente une deuxième surface inclinée (20) qui est en appui à plat contre une deuxième surface de clavette (18) de la clavette (16).

7. Unité de serrage (10) selon l'une des revendications précédentes,
dans laquelle le corps de base (12) est une pièce de tôle pliée en une forme tridimensionnelle, qui est découpée dans une tôle métallique.

8. Unité de serrage (10) selon la revendication 7,
dans laquelle la pièce de tôle pliée comprend une plaque de base rectangulaire (34) avec deux premiers côtés (36) opposés l'un à l'autre et avec deux deuxièmes côtés (38) opposés l'un à l'autre, une plaque de guidage (40) respective, pliée de +90° hors du plan de la plaque de base (34), dépasse de chaque premier côté (36), les deux mâchoires de serrage (14) sont situées entre les deux plaques de guidage (40) et sont guidées par celles-ci dans la première direction de déplacement.

9. Unité de serrage (10) selon la revendication 8,
dans laquelle chaque plaque de guidage (40) a une forme rectangulaire avec deux premiers côtés opposés l'un à l'autre et avec deux deuxièmes côtés opposés l'un à l'autre,
un repli (42) respectif est formé sur le premier côté de la plaque de guidage (40) respective, opposé au premier côté (36) de la plaque de base (34), chaque repli engageant par l'arrière les deux mâchoires de serrage (14), et/ou
des tenons de guidage (44) pliés sont formés sur les deuxièmes côtés des plaques de guidage (40), lesquels s'engagent dans des rainures de guidage (46) correspondantes formées dans la première direction de déplacement des deux côtés dans les deux mâchoires de serrage (14).

10. Unité de serrage (10) selon la revendication 9,
dans laquelle la longueur de la clavette (16) entre les deux plaques de guidage (40) est supérieure à la distance libre entre les deux replis (42) pour être engagée par l'arrière par ceux-ci.

11. Unité de serrage (10) selon l'une au moins des revendications 8 à 10,
dans laquelle une plaque de maintien (48) respective, pliée d'une valeur d'angle négative hors du plan de la plaque de base (34), dépasse de chaque deuxième côté (38) de la plaque de base (34), et il est en particulier prévu que les surfaces des plaques de maintien détournées l'une de l'autre présentent un profilage (50).

12. Unité de serrage (10) selon l'une au moins des revendications 8 à 11,
dans laquelle une ouverture (52) est ménagée dans la plaque de base (34), laquelle est alignée avec le trou taraudé (22) de la clavette (16) destiné à recevoir une broche filetée (26).

13. Unité de serrage (10) selon l'une au moins des revendications 8 à 12, dans laquelle le dispositif de fixation destiné à monter de manière amovible la partie de ferrure (56) sur le corps de base (12) comprend au moins une portion (54) de la plaque de base (34) pliée hors celle-ci.
